# EUROPEAN PATENT APPLICATION

(11) **EP 2 088 655 A1**
(43) Date of publication of application: **12.08.2009**
(21) Application number: 08101409.4
(22) Date of filing: 08.02.2008
(51) Int. Cl.: H02G 15/105, H02G 15/188, H01R 4/02, H01R 4/18, H01R 4/62, H01R 4/64

(54) **A cable casing and a method of attaching a cable casing to a screen of a cable**

(71) Applicant: ABB Technology AG, 8050 Zürich (CH)
(72) Inventor: Tranefors, Kai, 504 93 Borås (SE); Persson, Sture, 441 51 Alingsås (SE); Persson, Martin, 441 39 Alingsås (SE); Bexander, Björn, 414 78 Göteborg (SE); Källberg, Lars, 441 51 Alingsås (SE)
(74) Representative: Dahlstrand, Björn

(57) **Abstract**

A cable casing comprising a metallic tubular element (1) that has an end portion (2, 3) adapted to be attached to a cable extending into said tubular element (1) in a longitudinal direction thereof. In said end portion (2, 3), said tubular element (1) is provided with a plurality of foldable tongues (9).

## Description

### TECHNICAL FIELD

The present invention relates to a cable casing comprising a metallic tubular element that has an end portion adapted to be attached to a cable extending into said tubular element in a longitudinal direction thereof.

The invention also relates to a method of attaching a cable casing to a metallic screen of a cable, wherein the cable casing comprises a metallic tubular element, and wherein the cable is inserted into said tubular element, and an end portion of said tubular element is connected to said screen.

Typically, but not necessarily, the cable casing of the invention is a cable joint casing or a cable termination. Further, the cable is, typically, a medium or high voltage cable of the kind provided with a metallic screen, or sheath, that is to be locally exposed in the region of the casing and electrically connected to the metallic tubular element of the casing.

Medium and high voltage is referred to as voltages of 1 kV and above.

### BACKGROUND OF THE INVENTION AND PRIOR ART

In medium and high voltage transmission systems, cable terminations and cable joints are common. Typically such terminations and joints include a cable casing that encloses the cable in the region of the joint or termination thereof. Inside the casing there is a spacing between the inner periphery of the casing and the cable extending through the latter. However, in an end portion of the casing the cable is in contact with the casing.

A typical cable casing comprises a metallic tubular element that forms a metallic barrier which protects the joint or termination from water. Accordingly, the casing should be hermetically sealed, for instance in said end portion, in order to prevent water, not only as liquid but also in a gaseous state, to reach the cable termination or joint. Moreover, in order to enclose an electric field generated by the cable, the tubular metallic element of the casing may be electrically connected to a metallic sheath that forms part of the cable and that encloses the conductor or conductors thereof.

Casings of the same kind and the same size may be used for cables of different dimensions. Accordingly, there might be a difference between the inner diameter of the end portion of the casing and the outer diameter of the screen or exposed sheath of the cable. In order to seal the spacing between the inner diameter of the end portion of the casing and the outer diameter of the cable, prior art suggests that a tape made of lead be wound onto the cable, such that the wound tape forms a cone up to the dimension of the inner diameter on the casing. Subsequently, the casing is slid onto said cone, and the cone is covered by means of soldering all the way from the sheath to the casing. Preferably, tin is used as a soldering material. Finally, a electrically insulating sleeve is provided around the exposed metal in the thus formed transition region between the cable and the casing.

A disadvantage of the described design of casings of prior art, as well as the method of prior art, is that it makes the application of the casing onto the cable both labour intensive and costly, since it requires a lot of lead to be used, as well as a lot of time and skill of the jointer.

### THE OBJECT OF THE INVENTION

Accordingly, it is an object of the present invention to present a cable casing that remedies the disadvantages of prior art mentioned above.

It is also an object of the invention to present a method of applying a cable casing to a cable that remedies the disadvantage of prior art as described above.

### SUMMARY OF THE INVENTION

The object of the invention is achieved by means of the initially defined cable casing, characterised in that, in said end portion, said tubular element is provided with a plurality of foldable tongues. Thereby, said tongues may be folded such that they get in contact with an outer periphery of a cable to be connected to and be enclosed by the casing.

According to a preferred embodiment said tongues extend in a longitudinal direction of said tubular element. Thereby, the insertion of the cable into the casing is facilitated and the tongues may be attached to the cable by folding a part thereof inwards in a radial direction towards the cable.

Accordingly, it is preferred that said tongues are foldable in a radial direction. Preferably, the tongues are made of a ductile material that permits them to deform plastically and retain their folded position in close relationship or, preferably, in contact with the cable. The ductility of the tongues is sufficient to guarantee that a sufficient folding be performed with a maintained integrity of the tongues, i.e. no fractures detrimental to the sealing capacity or mechanical strength thereof being generated.

According to a preferred embodiment, said tongues are foldable so as to define a portion that narrows from a base portion towards free ends of said tongues. Said portion may be defined as an at least partly conical portion, wherein partly conical portion should be referred to as a portion that defines a truncated cone or element of similar design. Thereby a smooth transition region between casing and cable may be achieved, which might be advantageous from a mechanical as well as electrical point of view.

Preferably, each of said tongues forms an extension of said tubular element and has a free extreme end, wherein the width of said tongue decreases towards said extreme end. Thereby, through said folding, the generation of a transition region, generally a truncated cone, will be permitted without any overlapping of adjacent tongues.

According to a preferred embodiment, said tongues are evenly distributed around the periphery of the tubular element. Thereby, a symmetric set of tongues will result in a symmetric transition region, such as a truncated cone.

The tongues comprise an electrically conducting material, preferably a metal. According to one embodiment, said tongues comprise an aluminium alloy as a main constituent. An aluminium alloy has the advantage of being both ductile, electrically conducting, of light weight and high strength as well as relatively easy to deform. However, other metals such as copper are also conceived.

Preferably, also the tubular element comprises an aluminium alloy as a main constituent, although other metals, such as copper, may also be conceived. It is preferred that the tongues and the tubular element comprise the same main constituent, and, preferably, forms part of one and the same element, generated in a common operation, for example the forming of a tube out of a sheet. Thereby, the costs for the production of such an element may be reduced, and the transition region between tongues and the tubular body is functionally improved.

Preferably, said tongues are provided with a layer that has a composition of a higher adhesiveness in relation to a soldering material used for sealing said end portion than has the main constituent of said tongues. This is especially the case when the main constituent of the tongues comprise an aluminium alloy, since the latter is not very adhesive to tin, which is a preferred soldering material.

According to one embodiment, said layer comprises a plurality of sub-layers of increasing adhesiveness towards to the nearest outer sub-layer, and that the outermost sub-layer has the highest adhesiveness in relation to a soldering material used for sealing said end portion. This solution is preferred for those cases in which only one layer, comprising only one composition, is not enough in order to improve the adhesion between the main constituent of the tongues and the soldering material. In other words, the single layer does not have a sufficient adhesiveness to both the main constituent of the tongue and the soldering material. Instead, a plurality of sub-layers that lead to a stepwise improvement of the adhesiveness to the soldering material is suggested. Accordingly, every sub-layer has a adhesiveness to the next outer sub-layer that is higher than that between its adjacent inner layer and said next outer layer.

Preferably, said layer comprises a plurality of sub-layers of increasing adhesiveness towards the nearest adjacent inner sub-layer, wherein the innermost sub-layer has the highest adhesiveness to a main constituent of said tongues. This relationship is in analogy with that for the opposite direction, i.e. towards the outermost sub-layer, but here each sub-layer has a better adhesiveness towards its closest inner neighbour than would its closest outer neighbour have.

According to one embodiment, said cable casing is a cable joint casing.

According to another embodiment, said cable casing is a cable termination.

The object of the invention is also achieved by the initially defined method, characterised in that said end portion of said tubular element is provided with a plurality of tongues that are folded such that they contact said screen.

The tongues may extend inwards in a radial direction from a base at which they are connected to the remaining part of said tubular element, such that they are folded outwards in a radial direction upon insertion of the cable through said end portion, in order to bear on the screen of the cable. However, according to a preferred embodiment, said tongues define an element that has an inner diameter that is larger than the outer diameter of said screen, wherein said tongues are folded inwards in a radial direction, towards said screen after insertion of the cable through said end portion. Preferably, the diameter of the base portion of the tongues, i.e. the transition region between the tongues and the remaining part of tubular element, is equal to or smaller than the smallest inner diameter of an element formed by said tongues before folding thereof towards any cable protruding through said element.

Preferably, during said folding, said tongues are plastically deformed. Thereby, the tongues may be folded in a radial direction inwards and remain in contact with the cable screen also after release of the folding force. If the tongues undergo plastic deformation there will also be less remaining strain in the material than if subjected only to a large elastic deformation. Thereby, a subsequent soldering operation will be facilitated, and the final product may be mechanically stronger.

According to a preferred embodiment, subsequently to said folding, said end portion is sealed by means of a soldering step. During this step a soldering material is permitted to fill the gaps or slots between the tongues as well as any gap between the tongues and the underlying screen of the cable in the contact region between said tongues and screen. Preferably, the tongues are covered with said soldering material in order to guarantee a tight sealing. In this context it should be mentioned that the sealing should be a gas-tight sealing. After having been sealed by means of soldering, the transition region, mainly formed by said tongues and any further exposed metallic part of the cable screen and the tubular element, is electrically insulated from the surrounding atmosphere. For this purpose, a sleeve or the like may be threaded onto said region.

In order to facilitate a symmetric folding of the tongues it is preferred that, before said folding of the tongues, said cable is centred in said tubular element. After the folding of the tongues and the soldering of said transition region, the tongues themselves will be able of centring the cable in the tubular element.

Preferably, the cable is centred by means of a plurality of centration elements that are displaceable through radial openings in said tubular element in a radial direction and accessible from outside said tubular element. According to a preferred embodiment, said centration elements may comprise screws that penetrate a number of holes, at least three, through the wall of the tubular element in a radial direction and that are screwed towards the cable for the purpose of holding the latter in a centred position inside said tubular element.

After the folding of said tongues, preferably after the soldering step, said centration elements are removed and said radial openings are sealed, preferably by means of soldering.

Further features and advantages of the present invention will be described in the following detailed description.

### BRIEF DESCRIPTION OF THE DRAWINGS

Hereinafter preferred embodiments of a cable casing and a cable joint arrangement will be described in detail with reference to the accompanying drawing on which:
Fig. 1 is a perspective view of a cable casing according to the invention,
Fig. 2 is a detailed perspective view of an end portion of the casing of fig. 1 during attachment thereof to a cable,
Fig. 3 is a perspective view of the casing shown in fig. 2, during a subsequent step, and
Fig. 4 is a cross-sectional view of a cable joint arrangement provided with a cable casing according to the invention.

### DETAILED DESCRIPTION OF THE INVENTION

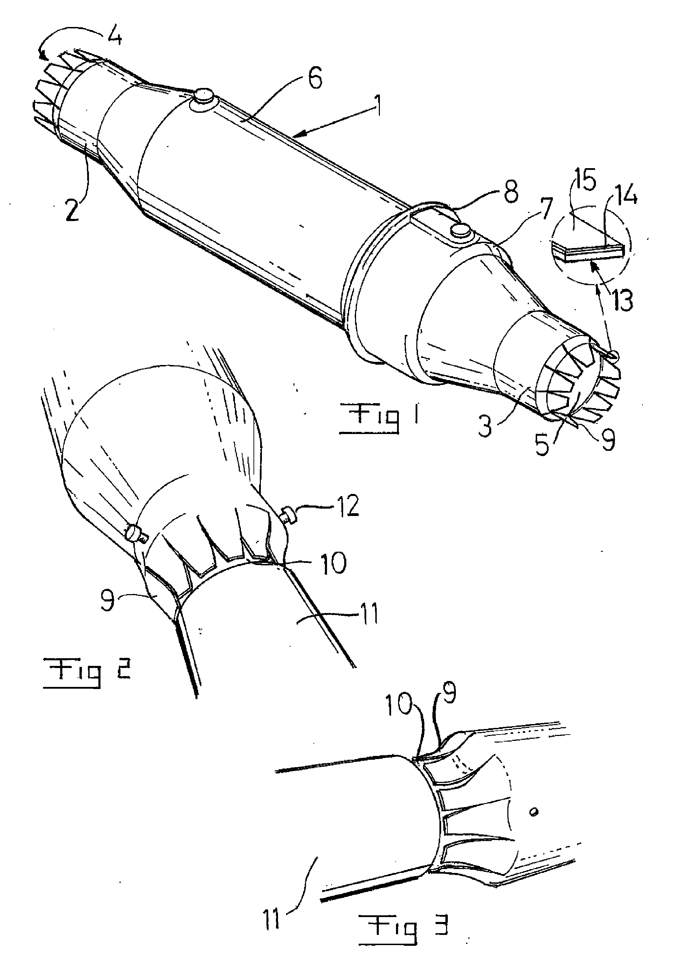

Fig. 1 shows a cable casing according to the invention. In this specific embodiment the casing is a cable joint casing, but it should be realised that the main features and advantages of said casing are also applicable and valid for other kinds of casings, for instance cable terminations.

The inventive casing comprises a metallic tubular element 1 with opposite end portion 2, 3, each of which comprises an end openings 4, 5. The tubular element comprises a first part 6 and a second part 7 joined together. Preferably, as in this embodiment, each of said parts 6, 7 is a tubular body, said parts being joined by a flange joint 8. The metallic tubular element 1 has the task of preventing water from penetrating the casing and affecting the cable. It also has the task of controlling an electric field inside the casing. Therefore, the tubular element 1 will be connected to a metallic sheath or screen that normally provides this functionality and is arranged as a part of a cable to be introduced into the cable casing.

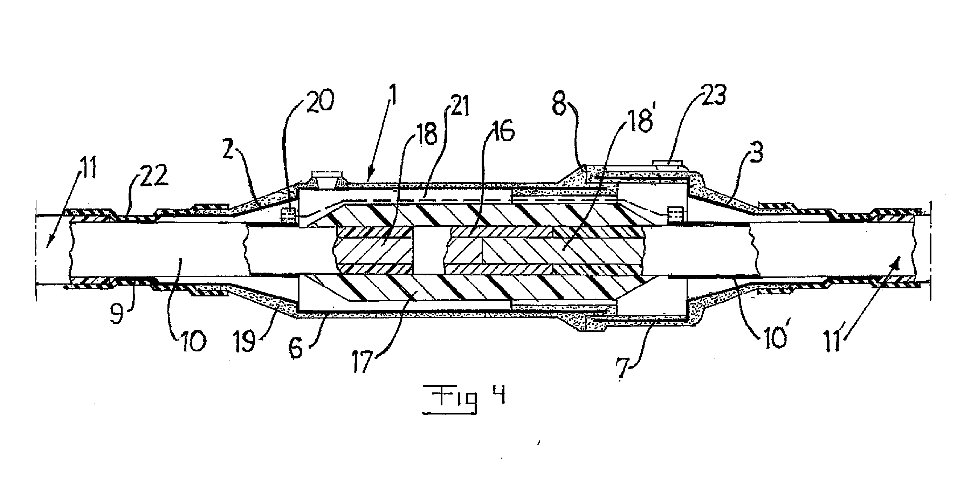

The metallic tubular element 1 may, though not shown in fig. 1, preferably, be provided with a protective coating or layer on the outer periphery thereof, said coating or layer having the double functionality of defining a mechanical protection as well as an electric insulation with regard to the environment, for instance earth. Such a protective coating or layer may be retro-fitted onto the tubular element 1 after mounting thereof or be directly cast on each of the individual parts 6, 7 of said element prior to the joining thereof. The outer protective layer will be further shown and described later with reference to fig. 4.

Each of the opposite end portions 2, 3 of the tubular element 1 comprises plurality of tongues 9 extending as extensions of the tubular element 1 in the longitudinal direction thereof. The tongues 9 are made of the same metallic material as the rest of the tubular element 1. Preferably, the tongues are part of the same piece of metal from which the tubular element has been formed. Preferably, such material comprises an aluminium alloy. They may either have been generated in the same step as the forming of the rest of the tubular element 1, for example in one and the same tube-forming operation, or during a subsequent step, for example a subsequent cutting thereof from an already formed tubular element.

The length of the tongues is adapted in order to permit the tongues to be firmly attached to cables of varying diameters. Accordingly, it is preferred that the length of each tongue 9 be at least 0,3 times, preferably at least 0,75 times the radius of the inner periphery of the part of the tubular element 1 from which the tongues 9 depart. Moreover, there should be a spacing between individual tongues such that they may be folded into contact with a wide range of cable diameters without overlapping each other. Preferably such range include diameters ranging from 0,75 times, and preferably 0,5 times that of the inner periphery of the tubular element 1 at the opening 4, 5 thereof up to a diameter corresponding to the one of said inner periphery of the tubular element 1.

The width of the tongues 9 decrease in a direction towards their free ends. The thickness of the tongues 9 and the bending characteristics of the material thereof are such that the tongues are foldable in a radial direction, such as illustrated in figs. 2 and 3 for example, in order to clamp or at least contact the metallic sheath or screen 10 of a cable 11 inserted into the tubular element through the openings 4, 5 around which the tongues 9 are provided. In fig. 2 there are also shown centration elements 12 by means of which the cable 11 is held in a centred position in the tubular element 1 before and during the folding of the tongues 9. Said centration elements 12 comprise a plurality of, in this case three, screws that extend through the wall of the tubular element 1 and the inner ends of which are assumed to bear on the cable 11. the centration elements 12 are angularly evenly distributed around the outer periphery of the tubular element 1 in a region adjacent the tongues 9. After completion of the folding and fixing of the tongues against the cable sheath 10, the centration elements 12 are removed, and the holes through which they penetrated the wall of the tubular element 1 are sealed, preferably by means of soldering.

Preferably, the main part of the tongues 9, i.e. the bulk or load-carrying part, is comprised by an aluminium alloy. However, since, in a later subsequent mounting step the spacing between the tongues is sealed by means of soldering of a tin alloy and aluminium adheres poorly directly against tin, there is provided a layer 13 of a material that has a higher adhesiveness against said tin alloy than has the aluminium alloy. Said layer 13 is provided on the outer surface, preferably the outer periphery, of the tubular element 1 and the tongues 9 in the region in which said soldering alloy is to be deposited. The layer 13 may, as suggested in fig. 1, comprise a plurality of sub-layers 14, 15 of increasing adhesiveness against tin. Accordingly, it is suggested that a first sub-layer 14 deposited on the aluminium alloy of the tongue 9 comprises Cr as a main constituent, and that a second sub-layer deposited on said Cr-layer comprises Ni as a main constituent. Accordingly, the Cr-layer adheres better against the A1 alloy of the tongue 9 than does the Ni-layer. The Ni-layer, in its turn, adheres better to Sn than does the Cr-layer. Other, equivalent combinations of sub-layer materials are of course also conceivable. The aluminium alloy may also be covered by any oxidizing-preventing sub-layer known per se, at least on the outer periphery but possibly also on the inner periphery.

Fig. 4 shows a cable joint casing according to the invention, in which a cable casing according to the invention encloses a joint between two medium or high voltage cables. 11, 11'. Inside the tubular metallic element 1 the two meeting cables are connected in a way known per se by means of a connection device 16. Prior to the connection of the individual cables 11, 11' by means of the connection device 16, each cable 11, 11' is inserted in its longitudinal direction into a respective of the parts 6, 7 of the casing through the end opening 4, 5 of the latter, and after said connection said parts 6, 7 are clamped together at the flange joint 8.

The connection device 16 comprises a sleeve by means of which the conductors 18, 18'of the meeting cables 11, 11' are firmly connected to each other. The connection device 16 is enclosed by an electric insulation body 17. The electric insulation body 17 preferably comprises a rubber material such as EPDM and encloses the meeting cables generally all the way between the end portions 2, 3 of the tubular element 1. Between the insulation body 17 and the inner periphery of the metallic tubular element 1 there is provided a filler, preferably a filler with higher thermal conductivity than air. Said filler may comprise sand as a main constituent. Another conceivable material might be a gel, for instance a silicone-based gel, preferably of a kind provided with compressible, gas-filled microspheres of a polymer material, for the purpose of compensating for thermally generated volumetric changes of the gel material itself, and preferably provided with any further particles that improves the thermal conductivity of said filler, such as Boron nitride particles.

On the outer periphery of the metallic tubular element 1 there is provided a protective layer 19 of an electrically insulating material such as an elastomer, for instance a poly urethane, for the purpose of protecting the latter from physical affection and for insulating the latter electrically from the environment. Preferably, the protective layer 19 is cast directly on the outer periphery of the separate parts 6, 7 that form the tubular element 1 when joined together. Also parts of the inner periphery of said parts 6, 7 may be provided with said protective layer 19, especially if the shields or screens 10, 10' of the incoming cables 11, 11' are separated and, therefore, the individual parts 6, 7 may carry different voltages, and an unwanted discharge therebetween is to be avoided. The embodiment shown in fig. 4, however, only shows the case in which the shields 10, 10' are directly interconnected by means of connection arrangement 20 provided inside the casing, and therefore there is less need of any such inner protective layer, and the parts 6, 7 of the tubular element 1 are in electric contact with each other. The connection arrangement 20 is only shown schematically by means of connection elements at the end of each shield 10, 10', and broken line 21 indicating that there is a suitable conduction element connecting the shields, and it should be understood that it may be designed in any suitable way inside the casing. Preferably, such an electric conduction element has a higher electric conductivity than the material of the metallic tubular element 1.

In the end portions 2, 3 of the casing the tongues 9 are in contact with the screen or shield 10, 10' of the respective cable 11, 11'. On top of and between the tongues 9 there is provided a further layer of a sealing metal, preferably a soldering material such as a tin alloy that seals the openings 4, 5 (see fig. 1) such that the casing defines a gas tight sealing with regard to the surrounding environment.

On top of those parts of the end portions 2, 3 that are not covered by the protective layer 20 disclosed earlier there are provided protective sleeves 22, for example made of a rubber material such as EPDM. The sleeves 22 are turned onto said portions once the sealing is completed and their task is to protect the underlying metal from mechanical affection as well as to electrically insulate the latter.

The casing is also provided with openings and caps 23 in which the above-mentioned filler may be introduced into the casing after the mounting thereof around the cable joint.

## Claims

1. A cable casing comprising
- a metallic tubular element (1) that has an end portion (2, 3) adapted to be attached to a cable extending into said tubular element (1) in a longitudinal direction thereof, **characterised in that**, in said end portion (2, 3), said tubular element (1) is provided with a plurality of foldable tongues (9).

2. A cable casing according to claim 1, **characterised in that** said tongues (9) extend in a longitudinal direction of said tubular element (1).

3. A cable casing according to claim 1 or 2, **characterised in that** said tongues (9) are foldable in a radial direction.

4. A cable casing according to claim 3, **characterised in that** said tongues (9) are foldable so as to define a portion that narrows from a base portion towards free ends of said tongues (9).

5. A cable casing according to any one of claims 1-4, **characterised in that** each of said tongues (9) forms an extension of said tubular element (1) and has a free extreme end, and that that the width of said tongue decreases towards said extreme end.

6. A cable casing according to any one of claims 1-5, **characterised in that** said tongues (9) are evenly distributed around the periphery of the tubular element (1).

7. A cable casing according to any one of claims 1-6, **characterised in that** said tongues (9) comprises an aluminium alloy as a main constituent.

8. A cable casing according to any one of claims 1-7, **characterised in that** said tubular element (1) comprises an aluminium alloy as a main constituent.

9. A cable casing according to any one of claims 1-8, **characterised in that** said tongues (9) are provided with a layer (13) of a composition of a higher adhesiveness in relation to a soldering material used for sealing said end portion (2, 3) than has the main constituent of said tongues (9).

10. A cable casing according to claim 9, **characterised in that** said layer (13) comprises a plurality of sub-layers (14, 15) of increasing adhesiveness towards to the nearest outer sub-layer, and that the outermost sub-layer (15) has the highest adhesiveness in relation to a soldering material used for sealing said end portion (2, 3).

11. A cable casing according to any one of claims 9 or 10, **characterised in that** said layer (13) comprises a plurality of sub-layers (14, 15) of increasing adhesiveness towards the nearest adjacent inner sub-layer, and that the innermost sub-layer (14) has the highest adhesiveness to a main constituent of said tongues (9).

12. A cable casing according to any one of claims 1-11, **characterised in that** said cable casing is a cable joint casing.

13. A cable casing according to any one of claims 1-11, **characterised in that** said cable casing is a cable termination.

14. A method of attaching a cable casing to a metallic screen (10) of a cable (11), wherein the cable casing comprises a metallic tubular element (1), and wherein the cable (11) is inserted into said tubular element (1), and an end portion (2, 3) of said tubular element (1) is connected to said screen (10), **characterised in that** said end portion (2, 3) of said tubular element (1) is provided with a plurality of tongues (9) that are folded such that they contact said screen (10).

15. A method according to claim 14, **characterised in that** said tongues (9) define an element that has an inner diameter that is larger than the outer diameter of said screen (10), and that said tongues (9) are folded inwards in a radial direction, towards said screen (10).

16. A method according to claim 14 or 15, **characterised in that**, during said folding, said tongues (9) are plastically deformed.

17. A method according to any one of claims 14-16, **characterised in that,** subsequently to said folding, said end portion (2, 3) is sealed by means of a soldering step.

18. A method according to claim 17, **characterised in that** said soldering step includes that slots between individual tongues (9) are filled by means of soldering.

19. A method according to any one of claims 14-18, **characterised in that,** before said folding of the tongues (9), said cable (11) is centred in said tubular element (1).

20. A method according to claim 19, **characterised in that** the cable is centred by means of a plurality of centration elements (12) that are displaceable through radial openings in said tubular element (1) in a radial direction and accessible from outside said tubular element (1).

21. A method according to claim 20, **characterised in that,** after the folding of said tongues (9), said centration elements (12) are removed and said radial openings are sealed.
